# EUROPÄISCHE PATENTSCHRIFT

(11) **EP 0 511 938 B1**
(45) Veröffentlichungstag und Bekanntmachung des Hinweises auf die Patenterteilung: **29.01.1997**
(21) Anmeldenummer: 92810204.5
(22) Anmeldetag: 20.03.1992
(51) Int. Cl.: A47J 45/06, A47J 36/06

(54) **Metallgeschirr**
Metal hollow-ware
Récipient de cuisson en métal

(30) Priorität: 30.04.1991 CH 1295/91
(43) Veröffentlichungstag der Anmeldung: 04.11.1992
(73) Patentinhaber: Heinrich Kuhn Metallwarenfabrik Aktiengesellschaft, 8486 Rikon im Tösstal (CH)
(72) Erfinder: Kuhn, Jacques, CH-8486 Rikon (CH)
(74) Vertreter: Frei, Alexandra Sarah

(56) Entgegenhaltungen:
- DE-C- 808 377
- FR-A- 2 582 209
- GB-A- 2 181 634

## Beschreibung

Die Erfindung bezieht sich auf ein Metallgeschirr gemäss Oberbegriff des Patentanspruchs 1 mit Behälter- und Deckelteil, das insbesondere als Kochgerät zu gebrauchen ist. Das Metallgeschirr wird durch seine spezielle Formgebung zu einem System von Geschirren.

Kochgeschirre sind in der Regel Vielzweckgeschirre und sollten demnach ein breites Spektrum an Eigenschaften abdecken. Im Vordergrund stehen Eigenschaften wie chemische und mechanische Resistenz der Oberfläche, die sichere und bequeme Handhabung (Ergonomie), um bspw. die Unfällgefahr beim Kochen niedrig zu halten, dann kommt die Form des Geschirres, das dem jeweiligen Kochzweck angepasst ist und sich möglichst gut säubern lassen muss, und dann dürften endlich auch die thermischen Eigenschaften (Material und Materialkombinationen) eines solchen Geschirres zum tragen kommen und nicht zuletzt auch die Robustheit bei gleichzeitig niedrigem Gewicht. Man kann davon ausgehen, dass nicht alle diese Eigenschaften in höchster Form in einem solchen Geschirr vereinigt werden können und jedes Geschirr deshalb einen mehr oder weniger guten Kompromiss darstellt.

Da sind einmal zusätztiche Forderungen an die Sauberkeit (Hygiene), die es verbieten (sollten), dass solche Geschirre schwierig zu reinigende Stellen (Fugen) aufweisen, bspw. an und um Henkel-, Griff- bzw. Stielansätzen. Üblich ist es, dass diese Gefässegriffe an der Aussenwand des Geschirres befestigt werden, sei es mit Nieten, durch eine Löt- oder Schweissverbindung. In vielen Fällen sind die Gefässegriffe relativ nahe über der Heizquelle angeordnet, sodass sie sich leicht erhitzen können. Professionelle Geschirre sind an den Gefässgriffen nicht gegen Wärme isoliert, dies, damit Isoliermaterialien weder durch Hitze noch durch einen rauhen Küchenbetrieb in Mitleidenschaft gezogen werden Solche Gefässegriffe sind sperrig und verunmöglichen eine raumsparende Stapelung von Kochgeschirren. Dies erschwert bis verunmöglicht bspw. das Wasserbadkochen mit ineinander gestellten Kochgefässen verschiedener Grösse.

Es ist Aufgabe der Erfindung, ein Metallgeschirr zu schaffen, das solche Nachteile nicht aufweist und zudem weitere Vorzüge in sich vereinigt. Die Aufgabe wird erfindungsgemäss gelöst mit einem Metallgeschirr gemäss Patentanspruch 1.

Die Erfindung zeigt, wie solch ein Metallgeschirr mit aus der Randpartie des Geschirres angeformten oder herausgeformten Haltegriffen in einfacher und materialsparender Weise hergestellt werden kann. Ein solches Geschirr ist in einem wesentlich vielseitigeren Ausmass einsatzfähig als übliche Kochgeschirre.

Ansätze in dieser Richtung, nämlich angeformte Gefässegriffe hauptsächlich an nichtmetallischen Kochgeschirren zu schaffen, sind bekannt, an metallischen Kochgeschirren aber scheiterten diese Versuch jeweils an verschiedenen Umständen. So zeigt das deutsche Gebrauchsmuster DE-U-90 01 134 ein Geschirr, das einen angeformten Rand aufweist, der mit dem Deckel zusammenspielt und der gleichzeitig zum Anfassen ausgebildet ist. Diese Gefässe bestehen aus Keramik, Glas oder Kunststoff und sind hauptsächlich für die Verwendung in Mikrowellengeräten bestimmt.

Eine ähnliche, aber doch stark zurückgenommene Ausgestaltung zeigt die WO-A-90/09133 derselben Anmelderin, ein Kochgefäss aus Metall, woran aber die Anformung nur als Schüttrand dient. Zur Handhabung weisen diese Geschirre die üblichen Gefäss- und Henkelgriffe auf. Auch dieses Geschirr spielt mit dem Deckel zusammen, derart, dass ein verbessertes Abschütten eines Sudes ermöglicht wird.

Die Druckschrift FR-A-2 582 209 zeigt ein Metallgeschirr mit Kunststoffgriffen, die am Geschirrand befestigt sind. Dieses Geschirr sieht aber keinen Deckel vor und ist daher als Kochgerät ungeeignet.

Eine tatsächliche Gefässgriffanformung ist bei allen drei Typen nicht realisiert, obschon daraus grosse Vorteile entstehen würden. Mit einer Gefässgriffanformung bei Metallgeschirren können die oben genannten Nachteile vermieden und zusätzliche Vorteile erreicht werden. Wichtig ist auch die Stabilität des Geschirres, insbesondere des Behälters, dessen Festigkeit im heissen und kalten Zustand und bei Belastung durch die Handhabung beiin Kochen stets ausreichend sein muss. Dies kann jedoch nicht zweckmässig darin bestehen, dass das Geschirr selber oder Teile davon aus einem möglichst dicken Blech gefertigt werden, um diese Festigkeit zu gewährleisten. Die Nachteile wären bspw. bei rostfreiem Stahl die schlechte Wärmeleitfähigkeit und das hohe Gewicht, bei Leichtmetall die geringe Festigkeit und die gegen Verfärbung und Oxidation ungeschützte Oberfläche. Die Erfindung verwendet zu diesem Zweck für das ganze Kochgefäss einen Schichtwerkstoff, der im Aufbau den Bodenpartien herkömmlicher, rostfreier Kochgeschirre entspricht. Als Schichtwerkstoffe eignen sich relativ dünne, rostfreie Stahlbleche kombiniert mit einem gut wärmeleitenden Metall, bspw. Aluminium in einer Dicke, mit welcher der Festigkeitsmangel dünner Stahlbleche kompensiert wird. Die damit erzielbare bessere Wärmeverteilung erstreckt sich nicht nur auf die Bodenpartie, sondern über die ganze Oberfläche des Kochgefässes. Auf diese Weise erhält man ein vollgekapseltes Systemgeschirr.

Daraus resultieren zwei Vorteile: Die gute Wärmeverteilung durch das Kernmaterial, z.B. Aluminium, und eine durch das Plattieren dünner, rostfreier Bleche erhöhte Festigkeit. Damit erst erhält man die Möglichkeit, dank ihrer Festigkeit beliebig geformte Griffhalter aus dem Gefässrand heraus zu formen, die die spezielle Formgebung durch Anformung der Griffansätze für ein Systemgeschirr, mit bspw. wesentlich verbesserter Stapelbarkeit, Verwendbarkeit untereinander, bspw. Wasserbadkochen und erweitertem Nutzen bspw. als Abdampf-, Absieb- oder Schüttgefäss erlauben. Durch Formgebung und Verwendung von wärmeverteilenden Schichtwerkstoffen, ist eine örtliche Ueberhitzung im Gefäss praktisch ausgeschlossen. Da das Schichtmaterial sich durch hohe Festigkeit auszeichnet, können die Griffhalter weit nach aussen gezogen werden. Solche Gefässgriffe sind dann ausserhalb und hoch über der Heizquelle angeordnet und stören nicht beim Ineinanderstellen der Gefässe.

Anhand einiger beispielsweisen Ausführungsformen wird nachfolgend gezeigt, wie ein Geschirr gemäss Erfindung gefertigt werden kann. Die nachfolgenden Figuren illustrieren folgendes:
- Figur 1: zeigt in Teilen A bis D den grundsätzlichen Herstellungsvorgang eines Metallgeschirrs gemäss Erfindung.
- Figur 2: zeigt in zwei Teilen A und B teilweise in Ansicht und geschnitten ein vollgekapseltes Geschirr, nämlich einen Behälterteil und einen passenden Deckelteil, Teil B zeigt eine mögliche Ausführungsform der Griffe in Richtung Zentrum des Behälterteils gesehen.
- Figur 3: zeigt das Geschirr gemäss Figur 2 von oben, also auf den Deckelteil gesehen.
- Figur 4: zeigt vier ineinander gestellte Behälterteile mit verschiedenen Durchmessern und versetzt angeordneten Griffen, von oben gesehen und
- Figur 5: eine Hintereinander-Projektion der Griffe der gestapelten Behälterteile gemäss Figur 4, hier ist die charakteristische Art dieses Systemgeschirr gut zu sehen.
- Figur 6: zeigt das Zusammenspiel von Behälter- und Deckelteil, wobei der Deckelteil hochgezogen ist und gleichermassen zeigt
- Figur 7: das Zusammenspiel von Behälter- und Deckelteil, wobei der Deckelteil flach gehalten ist, was den Systemcharakter des Geschirres wiederum zeigt.
- Figur 8: zeigt schematisch in Anlehnung an die Figuren 5,6 und 7 die Möglichkeiten der Vertikal-Variationen, welche durch die Anformung der Griffansätze am Gefässrand möglich werden.

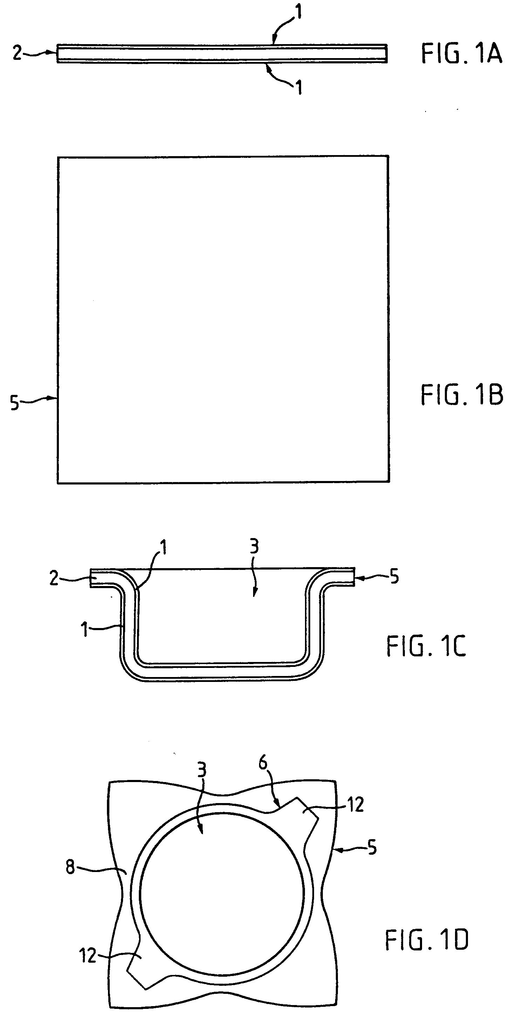

Figur 1 zeigt in einer Folge von A bis D, wie aus einem Werkstoff, hier ist es ein Schichtwerkstoff (Figur 1A), der beispielsweise aus einem gut warmeleitenden Kernmaterial 2 und beidseitig aufplattiertem, dünnem rostfreiem Stahl 1 aufgebaut ist. Der Schichtwerkstoff wird beispielsweise als quadratische Platte zugeschnitten (Figur 1B) und wird in dieser Form tiefgezogen. Das Tiefziehteil (Figur 1C) mit noch unbeschnittenem Rand 5 und dem Gefässinnenraum 3 sieht von oben gesehen aus, wie Figur 1D. Die eingezeichnete Schnittlinie 6 zeigt, wie der Rand des Gefässes samt Griffansätzen anschliessend beschnitten wird. Der durch die Beschneidung entstehende Abfall 8 ist um das Material der Flächen für die Griffansätze 12 kleiner als bei üblichen kreisrunden Gefässen. Grundsätzlich kann ein solcher Behälterteil auch als Deckelteil (hochgezogener Deckelteil) verwendet werden oder mit anderen Worten, grundsätzlich wird ein Deckelteil bezüglich Formgebung in gleicher Weise hergestellt wie der Behälterteil. In der Formgebung muss zwischen Deckel- und Behälterteil eines Geschirrs gemäss Erfindung kein Unterschied bestehen. Schichtwerkstoffe werden zur Herstellung der Behälterteile des Geschirrs verwendet, Deckelteile werden, allerdings nicht zwingend, in der Regel aus einem einschichtigen Werkstoff hergestellt.

Das Vorprodukt zur Herstellung eines Geschirrs gemäss Erfindung zeichnet sich durch seine spezielle Formgebung aus, an den Rohling für ein Gefäss sind schon die späteren Griffansätze 12 angeformt. Der Rohling besteht hier aus einem Schichtwerkstoff von drei Schichten, äussere Schichten 1 (Oberflächenschichten) und eine zwischen diesen angeordnete mittlere Schicht 2 (Wärmeleitschicht). Die Oberflächenschichten bestehen bevorzugt aus einem Material, das den Oberflächenanforderungen optimal gerecht wird und die Wärmeleitschicht besteht aus einem Material, das optimal der Wärmespeicherung und Wärmeverteilung gerecht wird. Diese einzelnen Schichten werden mittels bekannter Verfahren zu einem Ausgangswerkstoff vereinigt. Die Oberflächenschichten können aus Edelstahl bestehen, das als dünnes Blech beim Kochgeschirr aussen und innen die Oberfläche schützt, während die Wärmeleitschicht, wie gesagt, aus einem gut wärmeleitenden Material, z.B. Aluminium, bestehen kann, das als entsprechend dickeres Blech beim Kochgeschirr die Wärme speichert und verteilt. Edelstahl ist im Vergleich zu Aluminium ein schlechter Wärmeleiter, würde es in einer Blechdicke verwendet, die dem Geschirr die nötige Stabilität verleihen würde, um Griffe an der Randpartie des Geschirres anformen zu können, dann wäre die gleichmässige Wärmeverteilung im Geschirr unbefriedigend und das Gewicht zu hoch, und würde man dies mit dem wärmespeichernden Aluminium alleine tun, dann wären die Oberflächeneigenschaften bekanntermassen ungenügend und das Geschirr hätte ausserdem eine wesentlich geringere Festigkeit als dies bei Kombination mit Edelstahl der Fall ist.

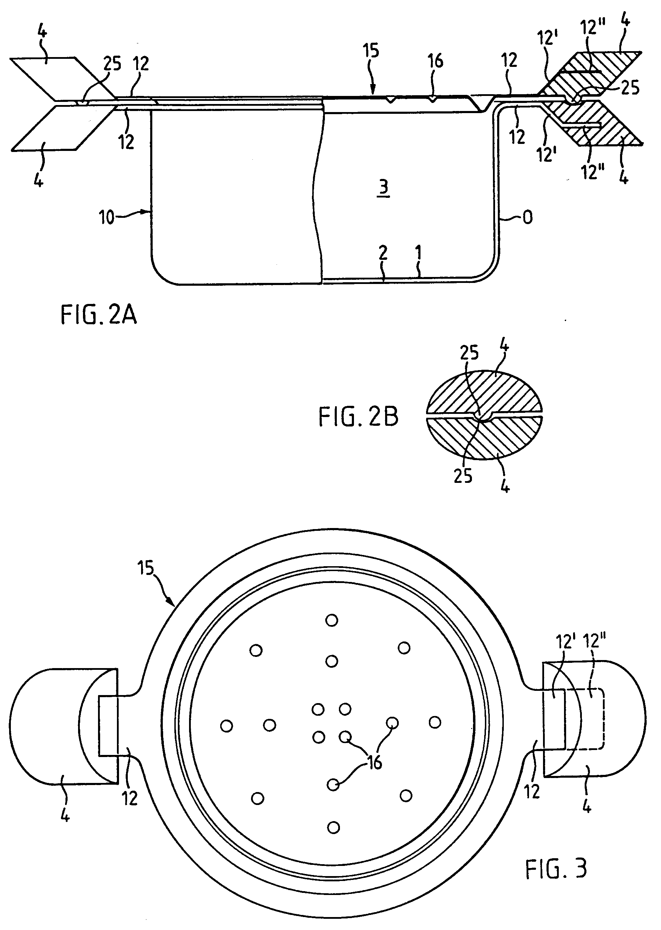

Im Gegensatz zu Kochgeschirren mit gekapselten Böden ist dieses Kochgeschirr vollgekapselt, bis in die Handgriffe. Dies sieht man in Figur 1C, welche nach einem Tiefziehprozess ein solches vollgekapseltes Geschirr mit einem Innenraum 3 zeigt. Hier ist noch speziell zu erwähnen, dass durch die in die Ecken des Ausgangsmaterials gesetzten Griffansätze Material gespart werden kann, es entsteht weniger Abfall und man benötigt erst noch kein zusätzliches Material für die Griffbefestigungsarmaturen, was sich bei einem teuren Ausgangsmaterial kostensparend auswirkt. Durch das Anformen der Griffansätze 12 (Fig. 2A und Fig. 3) an den Rohling können in der späteren Verarbeitung zum Fertigprodukt einige Arbeitsgänge, die allein der Anbringung der Henkel oder Griffe dienen, eingespart werden. Das heisst, dass mit dieser Massnahme erstens mit weniger Material und Arbeitsaufwand ein Kochgeschirr mit zweitens wesentlich besseren Eigenschaften bezüglich Geschirrgeometrie und Wärmehaushalt erzielt werden kann.

Figur 2A zeigt im Schnitt ein solches Geschirr, einen Behälterteil 10 (als Endprodukt) mit einem aufgelegten, zugehörigen Deckelteil 15, bei dem die beiden Griffe 4 an der Gefässrandverlängerung 12 befestigt sind. Man beachte hier die Möglichkeiten der Formgebung, bspw. gerade Verlängerungen (12 auf der linken Seite der Figur) oder abgewinkelte Verlängerungen (12/12'/12 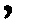 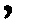 auf der rechten Seite der Figur), welche die Griffansätze bilden. Diese Formgebung ist ebensowenig an Grenzen gebunden, wie an ein gleichartiges Gefäss angenietete oder angeschweisste Henkelgriffe oder irgendwelche Art von Griffen. Man kann ihr nahezu jede beliebige Gestalt geben. Nur dass die Griffansätze 12 gemäss der Erfindung einerseits im gleichen Arbeitsgang, mit der das Gefäss hergestellt wird, entstehen und andererseits trotz der Einsparungen alle oben geschilderten Vorteile besitzen. Die Griffansätze 12 (oder 12/12'/12 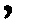 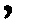 ) für die Griffe 4 sind in genau gleicher Weise an den Deckel angeformt, hier, ohne ein gekapseltes Material zu benützen. Figur 2B zeigt noch eine spezielle Formgebung des Griffes 4, nämlich entweder mit einer muldenförmigen Vertiefung oder einer kalottenförmigen Erhöhung, beide mit der Ziffer 25 bezeichnet. Sie dienen dazu, bei aufeinanderliegenden Griffen Behälterteil 10 und Deckelteil 15 einerseits gegen Verschiebung zu sichern und andererseits um Behälter- und Deckelteil zur Bildung einer Schütt- und Abdampföffnung voneinander zu distanzieren. Diese spezielle Formgebung (Vertiefung/Erhöhung) kann auch an den Griffansätzen 12 oder an den Ausformungen 12', 12'' angebracht werden, wo sie denselben Zweck erfüllen.

Figur 3 zeigt das Geschirr gemäss Figur 2 von oben. Man erkennt hier, dass die Formgebung für Behälterteil 10 und Deckelteil 15 gleich sein kann. Da der Deckelteil 15 nicht den gleichen Anforderungen bezüglich Festigkeit und Wärmeverteilung ausgesetzt ist, kommt es bei diesem Geschirrteil also hauptsächlich auf die Formgebung innerhalb der Systemgeometrie an. Die konsequent durchgearbeitete Formgebung zu einem Systemgeschirr sieht man daran, dass auch der Behälterteil 10 ohne Deckelteil 15 von oben betrachtet praktisch gleich aussieht.

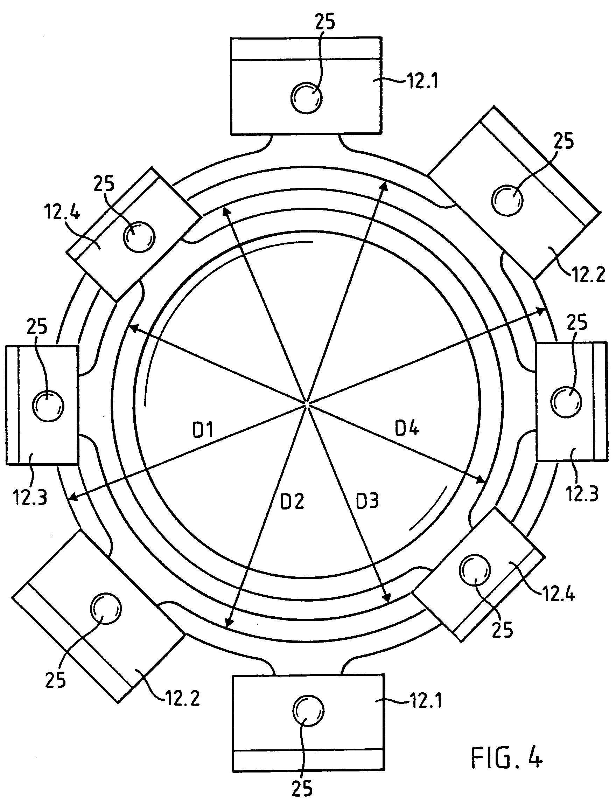

Figur 4 zeigt nun vier ineinander gestellte Behälterteile 10 der gleichen Art aber von verschiedener Grösse. Die einzelnen Behälterteile haben die Aussen-Durchmesser D1 bis D4, die Griffe sind in Anlehnung an diese Numerierung mit 12.1 bis 12.4 bezeichnet, wobei zwischen Griffansatz 12 und Griff 4 (Figur 3) an dieser Stelle nicht unterschieden wird. An der Oberseite der Griffe erkennt man die Mulden 25, in welche die passenden Erhöhungen am Deckelgriff eingelegt werden können. Dieses Detail wurde im Zusammenhang mit Figur 2B schon besprochen.

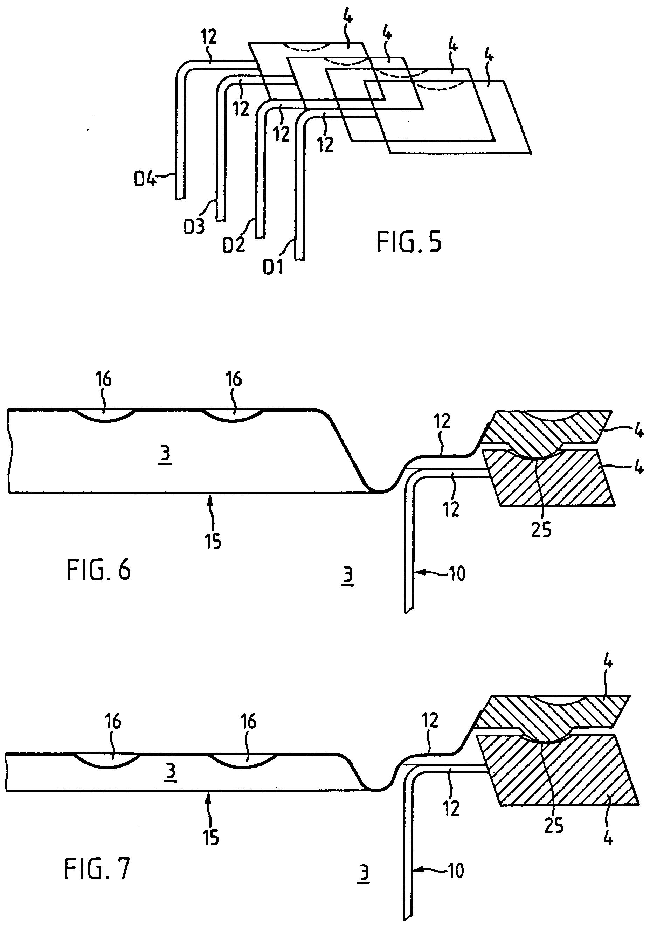

Diese Geschirre stehen bis zum Gefässrand eingelegt ineinander, wie ein Detail gemäss Figur 5 zeigt. Diese Figur zeigt in einer Hintereinander-Projektion der Griffe der gestapelten Behälterteile 10 gemäss Figur 4, wie die Behälterteile ineinander stellbar sind. Auch hier ist die charakteristische Art dieses Systemgeschirrs gut zu sehen. Mit nicht am Topfrand befestigten Griffen oder Stielen wäre eine solch raumsparende Stapelung nicht möglich. Die aus dieser Eigenschaft entstehenden weiteren Möglichkeiten der Handhabung und Ergonomie sind mannigfaltig und können durch die Anwendung solcher Gefässe ständig erweitert werden. Die raumsparende Stapelung geht so weit, dass das Volumen eines solchen Geschirrsatzes dem Volumen des grössten Gefässes entspricht.

Die Figuren 6 und 7 zeigen mögliche Ausgestaltungen der Griffe von Behälterteil 10 und Deckelteil 15 derart, dass sie miteinander in spezielle Funktionen treten können. Liegen die Behälter- und Deckelgriffe übereinander, sodass die Erhöhungen 25 in die Mulden 25 zu liegen kommen, wird der Deckelrand vom Behälterrand abgehoben. In dieser Stellung kann der Deckelteil 15 über die Drehpunkte, gebildet durch die Kalotten in den Mulden (25), gekippt werden, sodass zwischen Deckel- und Behälterrand auf der einen Seite eine Schütt- bzw. Absieböffnung, auf der anderen Seite ein Belüftungsspalt gebildet wird.

Figur 6 zeigt eine Variante mit hochgezogenen Deckelteil 15, der auf den Behälterteil 10 aufgelegt ist. Von der Formgebung kann der Deckelteil 15 grundsätzlich gleich sein wie der Behälterteil 10. Je nach thermischer und/oder Stabilitätsanforderung ist er entweder nur aus einem Blechmaterial mit angeformten Griffansätzen hergestellt oder aus einem Schichtmaterial wie der Behälterteil; in diesem Fall kann er für sich als Kochgeschirr verwendet werden. Diese grundsätzliche Ähnlichkeit wird durch die gleiche Referenznummer 3 für den Innenraum eines Deckelteils oder eines Behälterteils des Geschirres dargestellt. Die Höhe des hochgezogenen Deckelteils kann eine beliebige Tiefe aufweisen und für sich einen Behälter bilden, da die Griffanordnung der Öffnungen von Behälter- und Deckelteil gleich sein können. Von der Formgebung unterscheiden sich Behälter- und Deckelteil nicht wesentlich, nur dass der unterschiedliche Gebrauch in der Praxis die anzuwendenden Materialien zur Herstellung bestimmt.

Figur 7 zeigt eine Variante mit flachem Deckelteil 15, oder anders gesagt, mit einem kleineren Innenraum 3. In dieser Form ist der Deckelteil kaum als Behälter zu gebrauchen und er wird meistens nur aus einfachem Blech (nicht Schichtwerkstoff) mit angeformten Griffansätzen hergestellt werden. Aber auch hier gilt die Symmetrie an der Behälteröffnung, eine Symmetrie, die durch die Formgebung zu einem Systemgeschirr bedingt ist.

Beide Varianten der Deckelteile gemäss Figur 6 und 7 haben dieselbe Auflage an den Griffstellen. Die kalottenförmige Ausformung 25 an der Unterseite des Deckelgriffes 4 und die muldenförmige Vertiefung 25 an der Oberseite des Behältergriffes erlaubt ein Einrasten des Deckelteils in einer angehobenen Stellung zum Behälterteil 10, sodass durch eine Kippbewegung des Deckelteils einseitig eine Schütt- bzw. Absieböffnung, anderseitig ein Belüftungsspalt gebildet wird. Dies ist nur möglich, weil die Griffe direkt an der Randpartie des Geschirres angebracht sind und so in einer richtigen Relation zu den Deckelgriffen angeordnet sind. Hier zeigt sich auch dass die Behältergriffe am oberen Behälterrand bzw. der Randpartie des Behälters, zur Erzielung vieler Vorteile genau am richtigen Platz sind. Liegen die Griffe nicht übereinander, so ist der Kochbehälter durch den direkt auf dem Behälterrand aufliegenden Deckelteil abgeschlossen.

Wird die Deckelformgebung, wie in Figur 2A gezeigt, so gewählt, dass die Deckeloberfläche 15 als Ebene ausgebildet ist, wird es möglich, einen zweiten Kochbehälter zum Warmhalten und Energiesparen auf einen so ausgebildeten Deckelteil zu stellen. Dies wiederum ist nur möglich, weil die Deckelgriffe, wie beim Behälterteil auch, an der Randpartie angeordnet sind und der übliche, zentral angeordnete Deckelgriff wegfällt.

Wie in Figur 3 mit der Ziffer 16 bezeichnet und in den Figuren 6 und 7 im Schnitt gezeigt, können in einer Ebene ausgebildete Deckelteile mit gleichmässig angeordneten, nach unten gerichteten Mulden 16 versehen werden, die einerseits die Deckelebene stabilisieren, andererseits beim Kochen sich bildendes Kondenswasser gleichmässig verteilt über das Kochgut abtropfen lassen.

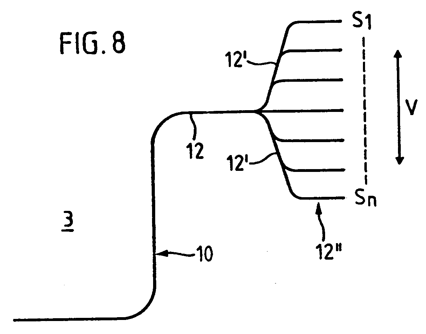

Figur 8 zeigt Vertikalvariationen (das sind Ausformungen der Griffansätze zur Variation der Höhe der Griffe zum Gefässrand mit einer oder mehreren Stufen) von angeformten Griffapsätzen, wodurch eine Variation von Funktionen von Geschirrteilen zueinander, Behälterteil zu Behälterteil (Wasserbadkochen), Behälterteil zu Deckelteil (Kochen/Abschütten) etc. erzielt werden können. Die Behälterwand 10 mit dem Griff-Ansatz 12 und den Ausformungen 12' und 12 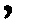 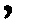 sind in Figur 8 in verschiedenen Stufen S1 bis Sn auf der Vertikalen V, gemäss welchen der Griffteil geformt sein kann, gezeigt.

Demgemäss können sich zwei Behälterteile 10 unterscheiden einerseits im Durchmesser und andererseits in der Anformung der Griffausätze 12, 12' und 12 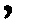 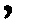 und den Griffhöhen S₁ bis Sₙ. Liegt der kleinere Behälterteil mit der unteren Fläche des Griffes 4 auf der oberen Fläche des Griffes 4 des grösseren Behälterteils, entsteht zwischen den Bodenflächen der Behälterteile ein Abstand. Dies ist eine der Positionen beispielsweise zum Wasserbadkochen. Werden zwei Behälterteile verschiedener Durchmesser mit zueinander versetzten Griffen ineinander gestellt, derart, dass die Griffe nicht mehr übereinander liegen, so sitzt der kleinere Behälterteil mit seinem Griffansatz 12 auf den Behälterrand des grösseren Behälterteils, wodurch die Behälterböden durch den Höhenunterschied der beiden Behälterteile distanziert werden. Dies wäre dann die Stapellage mit grösster Stapeldichte (auch Figur 5) und eine weitere Position zum beispielsweise Wasserbadkochen. Die Behälter-Deckel-Passung oder Behälter-Deckel-Uebereinstimmung erlaub bspw. das Geschirr, wie es in Figur 6 gezeigt ist, umzudrehen, sodass der Deckelteil als ein flacher Behälterteil und der vormalige Behälterteil als ein tief gewölbter Deckelteil funktioniert. Vom Gebrauch her wäre dies beispielsweise eine Geflügel-Kochvorrichtung. Auf diese Weise, einerseits mit der Anformung der Griffansätze an den Behälterrand und andererseits mit der Variation der Griffanformung, entsteht aus diesem Geschirr gemäss Erfindung ein weit ausbaubares Systemgeschirr, deren Variationen und Anwendungen unzählige sind. Zusammen mit dem Schichtmaterial ergeben sich zusätzliche Vorteile, die unter anderem den Systeminhalt noch erweitern.

Man sieht, dass die spezielle Formgebung, die spezielle Anordnung der Griffe, bzw. Stiele, die Materialwahl (thermische und festigkeitsmässige Eigenschaften), wie das Zusammenspiel von verschiedenen Behälter- und Deckelteilen ein vielseitiges Kochgeschirrsystem bilden. Dieses findet eine breitere Anwendung als Geschirre üblicher Bauart, vergleicht man nur so grundsätzliche Funktionen wie das Zusammenspiel von Behälter- und Deckelteil, bspw. zum Abschütten, Absieben oder Abdampfen oder das Ineinanderstellen zweier Behälter zum Wasserbadkochen, das durch die spezielle Gestaltung des Behälters ohne weiteres möglich ist und nicht zuletzt die verbesserte Stapelbarkeit solcher Gefässe, welche bei der Lagerung, für den Transport (Verpackung) und in der Küche ausserordentlich raumsparend sind. Alle diese Eigenschaften erreicht man durch die oben beschriebene Massnahme.

## Patentansprüche

1. Metallgeschirr bestehend aus mindestens einem Behälterteil (10) und mindestens einem Deckelteil (15) mit je einem Innenraum (3), je einer Geschirraussenwand (O) und je einem durchgehenden, radial nach aussen verlaufenden Rand, **dadurch gekennzeichnet,** dass aus dem jeweiligen Rand mindestens zwei Griffansätze (12) mit Ausformungen (12',12''), welche mit Griffen (4) versehen sind, einstückig herausgeformt sind, und dass die Griffe (4), Griffansätze (12) oder Ausformungen (12', 12 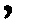 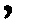 ) am Behälterteil (10) und am Deckelteil (15) je zusammenpassende Formgebungen (25) aufweisen, welche am einen Teil als Erhöhungen und am anderen Teil als Vertiefungen geformt sind und wobei mit in diesen Formgebungen (25) aufeinanderliegenden Griffen von Behälterteil und Deckelteil ein Abstand zwischen Behälterteil und Deckelteil gebildet wird, welcher als Abschütt-, Absieb- oder Abdampföffnung verwendbar ist.

2. Metallgeschirr nach Anspruch 1, **dadurch gekennzeichnet,** dass die Geschirrteile (10,15) je zwei gegenüberliegende Griffansätze (12) aufweisen.

3. Metallgeschirr nach Anspruch 1 oder 2, **dadurch gekennzeichnet,** dass die Griffe (4), Griffansätze (12) oder Ausformungen (12', 12'') mit Funktionsflächen versehen sind und derart an Geschirrteilen (10 und 15) angeordnet sind, dass sie je nach Anordnung von mehreren Geschirrteilen übereinander die relative Position der einzelnen Geschirrteile zueinander bestimmen.

4. Metallgeschirr nach Anspruch 3, **dadurch gekennzeichnet,** dass die Griffe (4) derart angeordnet sind, dass Anordnungen von verschiedenen Geschirrteilen übereinander möglich sind, in denen die relative Position der einzelnen Geschirrteile (10,15) nur von der Grösse der einzelnen Geschirrteile und der Formung ihrer Ränder abhängig ist.

5. Metallgeschirr nach Anspruch 1 oder 2, **dadurch gekennzeichnet,** dass der Deckelteil (15) derart flach ausgebildet ist, dass ein weiterer Behälterteil (10) darauf gestellt werden kann.

6. Metallgeschirr nach Anspruch 1 oder 2, **dadurch gekennzeichnet,** dass die Griffe (4) so angeordnet sind, dass sie sich beim Kochen ausserhalb und hoch über der Heizquelle befinden.

7. Metallgeschirr nach einem der Ansprüche 1 bis 6, **dadurch gekennzeichnet,** dass mindestens ein Geschirrteil (10 und/oder 15) aus einem Schichtwerkstoff gefertigt ist.

8. Metallgeschirr nach Anspruch 7, **dadurch gekennzeichnet,** dass der Behälterteil (10) zur Vergrösserung der Festigkeit und Verbesserung der Wärmeverteilung eine Vollkapselung mittels eines Schichtwerkstoffs aufweist.

9. Metallgeschirr nach einem der Ansprüche 7 oder 8, **dadurch gekennzeichnet,** dass der Schichtwerkstoff aus je einer auf die Oberfläche optimierte Oberflächenschicht (1) und einer dazwischen liegenden auf die Wärmeverteilung optimierte Wärmeverteilschicht (2) gebildet ist.

10. Metallgeschirr nach Anspruch 9, **dadurch gekennzeichnet,** dass die Oberflächenschicht (1) aus einem rostfreien Material besteht und die Wärmeverteilungsschicht (2) aus einem Leichtmetall besteht.

11. Metallgeschirr nach Anspruch 10, **dadurch gekennzeichnet,** dass der Schichtwerkstoff aus rostfreiem Stahl und Aluminium besteht.

12. Metallgeschirr nach Anspruch 1, **dadurch gekennzeichnet,** dass es ein Tiefziehteil (5) mit mindestens zwei aus dem Tiefziehteil herausgeformten Griffansätzen (12) aufweist.

## Claims

1. Metal utensil comprising at least one container part (10) and at least one lid part (15) with in each case an inner space (3), in each case one utensil outer wall (O) and in each case a through, radially outwardly directed edge, characterized in that from the edge are shaped out in one piece at least two shoulders (12) with shape-outs (12', 12''), which are provided with handles (4), and that the handles (4), shoulders (12) and shape-outs (12', 12'') on the container part (10) and on the lid part (15) in each case have matching mouldings (25), which are shaped on one part as protuberances and on the other part as depressions and with the handles of the container part and lid part superimposed in said mouldings (25) a gap is formed between the container part and the lid part, which can be used as an evaporating, sieving or pouring off opening.

2. Metal utensil according to claim 1, characterized in that the utensil parts (10, 15) in each case have two facing shoulders (12).

3. Metal utensil according to claim 1 or 2, characterized in that the handles (4), shoulders (12) or shape-outs (12', 12'') are provided with functional surfaces and are so located on the utensil parts (10 and 15), that they in each case determine as a function of the superimposed arrangement of several utensil parts, the mutual relative positioning of the individual utensil parts.

4. Metal utensil according to claim 3, characterized in that the handles (4) are so positioned that superimposed arrangements of different utensil parts are possible, in which the relative position of the individual utensil parts (10, 15) is only dependent on the size of the individual utensil parts and the shaping of their edges.

5. Metal utensil according to claim 1 or 2, characterized in that the lid part (15) is so flat that a further container part (10) can be placed thereon.

6. Metal utensil according to claim 1 or 2, characterized in that the handles (4) are so positioned that during cooking they are located outside and well above the heating source.

7. Metal utensil according to one of the claims 1 to 6, characterized in that at least one utensil part (10) and/or (15) is made from laminate.

8. Metal utensil according to claim 7, characterized in that, for increasing the strength and improving the heat distribution, the container part (10) has a completely encapsulation by means of a laminate.

9. Metal utensil according to one of the claims 7 or 8, characterized in that the laminate is formed from in each case one surface-optimized surface layer (1) and an interposed, heat distribution-optimized heat distributing layer (2).

10. Metal utensil according to claim 9, characterized in that the surface layer (1) is made from a stainless material and the heat distribution layer (2) from light metal.

11. Metal utensil according to claim 10, characterized in that the laminate comprises stainless steel and aluminium.

12. Metal utensil according to claim 1, characterized in that it has a deep-drawn part (5) with at least two shoulders (12) shaped out of the deep-drawn part.

## Revendications

1. Vaisselle en métal composée d'au moins une partie formant récipient (10) et au moins une partie formant couvercle (15) pourvues chacune d'un espace intérieur (3), d'une paroi extérieure de vaisselle (O) et d'un bord continu orienté vers l'extérieur dans le sens radial, caractérisée en ce que sur le bord de chacune d'elles au moins deux saillies de poignées (12) avec moulures (12', 12'') qui sont pourvues de poignées (4), sont formées d'un seul tenant et en ce que les poignées (4), les saillies de poignées (12) ou les moulures (12', 12'') présentent sur la partie formant récipient (10) et sur la partie formant couvercle (15) des conformations (25) adaptées l'une à l'autre, qui sont formées sur une pièce comme des saillies et sur l'autre comme des creux et dans laquelle les poignées des parties formant récipient et couvercle posées l'une sur l'autre créent avec ces conformations (25), entre la partie formant récipient et la partie formant couvercle, un écartement qui peut être utilisé comme ouverture de versement, d'égouttage ou d'évaporation.

2. Vaisselle en métal selon la revendication 1, caractérisée en ce que les parties de la vaisselle (10, 15) présentent chacune deux saillies pour poignées (12) qui se font face.

3. Vaisselle selon la revendication 1 ou 2, caractérisée en ce que les poignées (4), les saillies pour poignées (12) ou les évidements (12', 12'') sont pourvues de surfaces fonctionnelles et sont disposées sur les parties de la vaisselle (10 et 15) de façon à déterminer, si plusieurs pièces de vaisselle sont superposées, la position relative des différentes pièces de vaisselle.

4. Vaisselle en métal selon la revendication 3, caractérisée en ce que les poignées (4) sont disposées de telle sorte qu'il est possible de disposer différentes pièces de vaisselle les unes sur les autres, la position relative des différentes pièces de vaisselle (10, 15) dépendant seulement de la taille des différentes pièces et de la conformation de leurs bords.

5. Vaisselle en métal selon la revendication 1 ou 2, caractérisée en ce que la partie formant couvercle (15) est de forme plate, de telle sorte que l'on puisse poser dessus une autre partie formant récipient (10).

6. Vaisselle en métal selon la revendication 1 ou 2, caractérisé en ce que les poignées (4) sont disposées de telle sorte qu'elles se trouvent à l'extérieur et en hauteur au-dessus de la source de chaleur pendant la cuisson.

7. Vaisselle en métal selon l'une ou l'ensemble des revendications 1 à 6, caractérisée en ce qu'une partie de vaisselle au moins (10 et/ou 15) est fabriquée dans un matériau stratifié.

8. Vaisselle en métal selon la revendication 7, caractérisée en ce que la partie formant récipient (10) présente, en vue d'accroître sa solidité et d'améliorer la répartition de la chaleur, un revêtement intégral en matériau stratifié.

9. Vaisselle en métal selon l'une ou l'ensemble des revendications 7 ou 8, caractérisée en ce que le matériau stratifié est formé de couches de surface (1) optimisées en fonction de la surface et d'une couche de répartition de la chaleur (2) optimisée en vue de la répartition de la chaleur.

10. Vaisselle en métal selon la revendication 9, caractérisée en ce que la couche de surface (1) se compose d'un matériau inoxydable et la couche de répartition de la chaleur (2) d'un métal léger.

11. Vaisselle en métal selon la revendication 10, caractérisée en ce que le matériau stratifié se compose d'acier inoxydable et d'aluminium.

12. Vaisselle en métal selon la revendication 1, caractérisée en ce qu'elle présente une pièce emboutie (5) avec au moins deux saillies pour poignées (12) formées à partir de la pièce emboutie.
